# EUROPEAN PATENT APPLICATION

(11) **EP 4 410 865 A1**
(43) Date of publication of application: **07.08.2024**
(21) Application number: 22876325.6
(22) Date of filing: 28.09.2022
(51) Int. Cl.: C08G 65/326

(54) **PRODUCTION METHOD OF THIOL GROUP-CONTAINING POLYETHER POLYMER**

(30) Priority: 29.09.2021 JP 2021159012
(71) Applicant: Toray Fine Chemicals Co., Ltd., Tokyo 101-0041 (JP)
(72) Inventor: NISHIMURA, Tomoaki, Ichihara-shi, Chiba 299-0196 (JP); SEO, Motoharu, Ichihara-shi, Chiba 299-0196 (JP); ABE, Hiromitsu, Ichihara-shi, Chiba 299-0196 (JP)
(74) Representative: Mewburn Ellis LLP
(86) International application number: PCT/JP2022/036136
(87) International publication number: WO 2023/054459

(57) **Abstract**

An object of the present invention is to provide a method for producing a polyether polymer, in which side reactions are suppressed to increase the thiol group content without adding hydrogen sulfide, and the halogen content is reduced. The present invention is a method for producing a thiol group-containing polyether polymer by reacting a terminal halogenated polyether polymer and a hydrogen sulfide metal salt by a substitution reaction, in which the substitution reaction is performed in a closed system, the terminal halogenated polyether polymer is charged into a closed system in an amount of 20 vol% or more of a volume of the closed system, and the hydrogen sulfide metal salt is charged into the closed system as an aqueous solution having a concentration of 25 mass% or more.

## Description

### TECHNICAL FIELD

The present invention relates to a technical field related to an epoxy resin curing agent, and particularly to a method for producing a thiol group-containing polyether polymer.

### BACKGROUND ART

A cured product containing an epoxy resin has good adhesiveness, chemical resistance, a low shrinkage rate, and excellent physical properties and has been widely used conventionally as a coating material, an adhesive, and the like.

Among them, epoxy adhesives have good adhesiveness and chemical resistance. As a curing agent for an epoxy adhesive, a polythiol compound is used when fast curability and high adhesive strength are required. When a polythiol compound is used as a curing agent for an epoxy adhesive, curing is rapid as compared with other epoxy curing agents.

Many terminal-thiol-group-containing compounds having no polysulfide skeleton in the main chain have been reported as compounds capable of causing a thiol group and an epoxy group to rapidly react (see, for example, Patent Document 1). Among them, as an economical and safe curing agent for an epoxy resin, a compound having a polyether skeleton in the main chain and having three or more thiol groups in one molecule is widely commercially available. Examples of the compound having a polyether skeleton in the main chain and three or more thiol groups in one molecule include "POLYTHIOL QE-340M" manufactured by Toray Fine Chemicals Co., Ltd. and "Capcure 3-800" manufactured by Gabriel Performance Products, LLC. Generally, such a polythiol-based curing agent is used in a state of being mixed with an epoxy resin and a tertiary amine as a curing accelerator.

As a method for preparing the polythiol-based curing agent described above, for example, a method is known in which a chlorinated polyether polyol is prepared from a polyether polyol and epichlorohydrin, sodium hydrogen sulfide is added thereto, and a polythiol-based curing agent is prepared using glycerin as a catalyst (see, Patent Document 2). In the production method described in Patent Document 2, hydrogen sulfide is used as a protective gas for suppressing side reactions in consideration of the chemical reaction equilibrium. However, hydrogen sulfide is a toxic gas that acts on cranial nerves to cause death at a concentration of 700 ppm or more as well as a highpressure combustible/flammable gas, and thus is regulated by the High Pressure Gas Safety Act. Therefore, in order to handle hydrogen sulfide, great cost and labor are required to ensure the safety of the operator, and the safety of the production and incidental facilities. In addition, the obtained polythiol-based curing agent has a large amount of chlorine remaining in the product, and may not be used for electronic material applications that are required not to contain a halogen or a halogen compound.

Therefore, there has been a demand for a method for producing a polythiol having high safety during operation, a low halogen content of the polythiol, a low viscosity, good handleability, and a high thiol group content

### PRIOR ART DOCUMENT

### PATENT DOCUMENTS

Patent Document 1: Chinese Patent Application Publication No. 108822011
Patent Document 2: Chinese Patent Application Publication No. 109880075

### SUMMARY OF THE INVENTION

### PROBLEMS TO BE SOLVED BY THE INVENTION

An object of the present invention is to provide a production method that suppresses side reactions to increase the thiol group content in a thiol group-containing polyether polymer, reduces the halogen content, lowers the viscosity, and imparts good handleability.

### SOLUTIONS TO THE PROBLEMS

The present invention is a method for producing a thiol group-containing polyether polymer by reacting a terminal halogenated polyether polymer and a hydrogen sulfide metal salt by a substitution reaction, in which
the terminal halogenated polyether polymer has a polyether moiety represented by the following general formula (1) in a main chain of the terminal halogenated polyether polymer, and a structure represented by the following general formula (2) at a terminal of the terminal halogenated polyether polymer,
the hydrogen sulfide metal salt is represented by the following general formula (3),
the thiol group-containing polyether polymer has a polyether moiety represented by the general formula (1), and a structural unit represented by the following formula (4) at a terminal of the thiol group-containing polyether polymer,
the substitution reaction is performed in a closed system,
the terminal halogenated polyether polymer is charged into the closed system in an amount of 20 vol% or more of a volume of the closed system, and
the hydrogen sulfide metal salt is charged into the closed system as an aqueous solution having a concentration of 25 mass% or more:

   R¹-(R²O)ₙ]ₘ- (1)
where R¹ is a group having a structure obtained by removing a hydrogen atom from a polyvalent amine or polyhydric alcohol having 10 or less carbon atoms, R² is an alkylene group having 2 to 6 carbon atoms, n is an integer of 1 to 200, and m is an integer of 2 to 8,

   -CH₂CH(OH)CH₂-X (2)
where X is a halogen atom,

   M(SH)ₖ (3)
where M is an alkali metal or an alkaline earth metal, and k is an integer of 1 to 2, and

   -CH₂CH(OH)CH₂-SH (4).

### EFFECTS OF THE INVENTION

In the production method of the present invention, by performing a substitution reaction in a closed system to confine hydrogen sulfide gas generated as a by-product, side reactions can be suppressed without previously supplying hydrogen sulfide as a protective gas, so that the thiol group content can be increased. In addition, since it is not necessary to add hydrogen sulfide from the outside, the need of equipment for transporting, storing, and supplying hydrogen sulfide is eliminated to reduce the risk, and it is not regulated by the High Pressure Gas Safety Act in the transportation and storage of raw materials. Furthermore, by using an aqueous solution having a hydrogen sulfide metal salt concentration of 25 mass% or more, it is possible to reduce the halogen content in the thiol group-containing polyether polymer and lower the viscosity to improve the handleability.

### EMBODIMENTS OF THE INVENTION

In the method for producing a thiol group-containing polyether polymer of the present invention, a terminal halogenated polyether polymer and a hydrogen sulfide metal salt are reacted by a substitution reaction to produce a thiol group-containing polyether polymer.

In the method for producing a thiol group-containing polyether polymer of the present invention, the substitution reaction is performed in a closed system. With such a configuration, hydrogen sulfide gas generated as a by-product is confined in the closed system, a side reaction of sulfidization in which molecules are dimerized is suppressed without supplying hydrogen sulfide from the outside without supplying hydrogen sulfide from the outside, thus making it possible to increase the thiol group content in the thiol group-containing polyether polymer as a target substance.

In addition, it is preferable that by-products other than hydrogen sulfide gas are also confined in the closed system, and substances other than hydrogen sulfide are not introduced therein after closing the reaction system. Note that performing degassing from a pressure control valve or the like for pressure control described later is not inconsistent with performing the reaction in the closed system. Examples of the reactor include an autoclave and a TEM-D type metal reactor manufactured by Taiatsu Glass Industrial Co., Ltd.; TEM-D500M, TEM-D1000M, TEM-D1500M, TEM-D3000MK, TEM-U-type reactor; TEM-U1000N, TEM-V type reactor; and TEM-V500.

The terminal halogenated polyether polymer has a polyether moiety represented by the following general formula (1) in the main chain.

R¹-(R²O)ₙ]ₘ- (1).

In the formula (1), R¹ is a group having a structure obtained by removing a hydrogen atom from a polyvalent amine or polyhydric alcohol having 10 or less carbon atoms, R² is an alkylene group having 2 to 6 carbon atoms, n is an integer of 1 to 200, and m is an integer of 2 to 8.

In the general formula (1), R¹ is a group having a structure obtained by removing m hydrogen atoms from a polyvalent amine or polyhydric alcohol having 10 or less carbon atoms. m is an integer of 2 to 8, and is preferably 2 to 5.

Examples of the polyvalent amine include triethanolamine and ethylenediamine.

Examples of the polyhydric alcohol include glycerin, trimethylolpropane, trimethylolethane, hexanetriol, diglycerin, pentaerythritol, triethanolamine, and sucrose. Among the polyols described above, glycerin, trimethylolpropane, and trimethylolethane are particularly preferable.

The polyvalent amine and the polyhydric alcohol may be used alone or in combination.

In the general formula (1), R² is an alkylene group having 2 to 6 carbon atoms. Examples of the alkylene group having 2 to 6 carbon atoms include ethylene, n-propylene, isopropylene, n-butylene, and isobutylene.

n is an integer of 1 to 200, and is preferably 1 to 100.

The terminal halogenated polyether polymer has a structure represented by the following general formula (2) at a terminal.

-CH₂CH(OH) CH₂-X (2).

In the general formula (2), X is a halogen atom, and is preferably selected from chlorine, bromine, and iodine. X is more preferably chlorine.

The terminal halogenated polyether polymer can be obtained by an addition reaction of a polyether polyol having a polyether moiety represented by the general formula (1) with epihalohydrin.

Examples of the polyether polyol include a polyvalent amine or polyhydric alcohol to which ethylene oxide, propylene oxide, tetrahydrofuran or the like is added.

Examples of the polyvalent amine include triethanolamine and ethylenediamine.

Examples of the polyhydric alcohol include glycerin, trimethylolpropane, trimethylolethane, hexanetriol, triethanolamine, diglycerin, pentaerythritol, and sucrose.

These polyvalent amines and polyhydric alcohols may be used alone or in combination.

As the polyether polyol, polypropylene glycol obtained by adding propylene oxide to glycerin, trimethylolpropane, trimethylolethane or pentaerythritol is particularly preferable.

The molecular weight of the polyether polyol is preferably 200 to 10,000, and more preferably 200 to 1,000.

Examples of the epihalohydrin include epichlorohydrin, epibromohydrin, epiiodohydrin, epifluorohydrin, and β-methylepichlorohydrin. Among them, epichlorohydrin is preferable.

The charged amount of the terminal halogenated polyether polymer is 20 vol% or more of the volume of the closed system. By setting the charged amount to 20 vol% or more, more preferably 25 vol% or more, and still more preferably 30 vol% or more, the pressure in the closed system is easily increased by hydrogen sulfide generated as a by-product, to thereby increase the hydrogen sulfide concentration in the reaction solution. By increasing the hydrogen sulfide concentration, a side reaction of sulfidization in which molecules are dimerized can be suppressed, so that an increase in viscosity of the product can be suppressed. The charged amount is preferably 70 vol% or less. With such a configuration, it is possible to safely operate without a rapid pressure change in the substitution reaction.

The hydrogen sulfide metal salt is represented by the following general formula (3).

M (SH)ₖ (3).

In the general formula (3), M represents an alkali metal or an alkaline earth metal, and examples thereof include lithium, sodium, potassium, rubidium, cesium, beryllium, magnesium, calcium, strontium, and barium.

In the general formula (3), k is an integer of 1 to 2.

Among the hydrogen sulfide metal salts, sodium hydrogen sulfide (NaSH) is preferable.

The hydrogen sulfide metal salt is charged into the closed system as an aqueous solution. The concentration of the hydrogen sulfide metal salt in the aqueous solution is 25 mass% or more. By setting the concentration to 25 mass% or more, preferably 32 mass% or more, and more preferably 40 mass% or more, the content of halogen in the thiol group-containing polyether polymer as a target substance can be reduced. In addition, by setting the concentration to 70 mass% or less, the stirring property during the substitution reaction can be favorably maintained, and the viscosity of the product can be lowered to improve the handleability.

In electronic material applications, components of products, parts, and materials are required not to contain a halogen or a halogen compound. The thresholds for halogen-free are defined by International Electrotechnical Commission (IEC) 61249-2-21, Institute for Printed Circuits (IPC) 4101B, and Japan Electronics Packaging and Circuits Association (JPCA) in Japan as international standards, and the chlorine (Cl) content is required to be 0.09 mass% (900 ppm) or less. In the thiol group-containing polyether polymer obtained by the production method of the present invention, by using an aqueous solution having a hydrogen sulfide metal salt concentration of 25 mass% or more, the content of the remaining halogen can be 900 ppm or less, preferably 600 ppm or less, and more preferably 300 ppm or less.

The charged amount of the hydrogen sulfide metal salt may be preferably 1.0 to 3.0 mol times the molar amount of halogen of the terminal halogenated polyether polymer. By setting the charged amount to 1.0 mol times or more, more preferably 1.1 mol times or more, the substitution reaction sufficiently proceeds, thus making it possible to obtain a thiol group-containing polyether polymer having a small halogen content. On the other hand, by setting the charged amount to 3.0 mol times or less, more preferably 2.0 mol times or less, the raw material cost can be suppressed, which is economically advantageous.

In the substitution reaction, a catalyst may be used. When the catalyst is used, the reaction rate is increased, and improvement in productivity can be expected. Examples of the catalyst that can be used include phase transfer catalysts such as tetrabutylammonium bromide (TBAB), tributylmethylammonium chloride (MTBAC), benzyltriethylammonium chloride (BTEAC), and tetrabutylphosphonium bromide (TBPB). Among them, TBAB and MTBAC are preferable.

The use amount of the catalyst is preferably 0.005 to 0.2 mol times, and more preferably 0.01 to 0.1 mol times the molar amount of halogen of the terminal halogenated polyether polymer.

In the substitution reaction, a solvent may be used. Examples of the solvent include alcohols such as methanol, ethanol, propanol, and butanol, ketones such as methyl ethyl ketone and methyl isobutyl ketone, esters such as ethyl acetate and butyl acetate, sulfoxides such as dimethyl sulfoxide, nitriles such as acetonitrile, amines such as pyridine, amides such as N,N-dimethylformamide, N,N-dimethylacetamide, and N-methylpyrrolidone, and water. Among them, N,N-dimethylformamide, N,N-dimethylacetamide, N-methylpyrrolidone, and water are particularly preferable.

However, when water is used as the solvent of the substitution reaction, the charged amount of water is limited to an amount such that the concentration of the hydrogen sulfide metal salt is not less than 25 mass% in a state of being mixed with the aqueous solution of the hydrogen sulfide metal salt.

When the solvent is used, the use amount of the solvent is preferably 0.2 to 5.0 mass times, and more preferably 1.0 to 3.0 mass times the mass of the terminal halogenated polyether polymer.

The reaction temperature of the substitution reaction is preferably 60 to 120°C, and more preferably 70 to 100°C. By setting the reaction temperature within such a range, the halogen content of the thiol group-containing polyether polymer can be reduced, and the viscosity can be lowered to improve the handleability.

The reaction time of the substitution reaction is preferably 1 to 20 hours, and more preferably 3 to 9 hours. By setting the reaction time within this range, the halogen content of the thiol group-containing polyether polymer can be reduced, and efficient production can be secured.

The gauge pressure in the closed system during the substitution reaction may be controlled to be preferably 0.01 to 5.0 MPa, and more preferably 0.1 to 3.0 MPa. By setting the gauge pressure within this range, the halogen content of the thiol group-containing polyether polymer can be reduced, and the viscosity can be lowered to improve the handleability.

The thiol group-containing polyether polymer obtained by the substitution reaction has a polyether moiety represented by the general formula (1) and a structural unit represented by the following formula (4) at a terminal.

-CH₂CH(OH) CH₂-SH (4) .

In the thiol group-containing polyether polymer, the content of the thiol group is preferably 8 mass% or more, more preferably 8 to 16 mass%, and still more preferably 9 to 15 mass%. When the content of the thiol group is within this range, liquid dripping is less likely to occur during use, and a viscosity with good handleability can be obtained.

In the present invention, the content of the thiol group can be determined by the iodine titration method in which a sample is dissolved in a mixed solution of toluene and pyridine, an aqueous potassium iodide solution is added thereto, and then the resulting solution was titrated with an iodine standard solution. Such a method is widely known and is disclosed, for example, in paragraph 0079 of Japanese Patent Laid-open Publication No. 2012-153794.

The viscosity of the thiol group-containing polyether polymer is preferably 9 to 17 Pa·s, and more preferably 10 to 14 Pa·s. When the viscosity is within this range, liquid dripping is less likely to occur during use, and handleability can be improved.

In the present invention, the viscosity of the thiol group-containing polyether polymer can be measured using a viscometer U-EII manufactured by Toki Sangyo Co., Ltd.

### EXAMPLES

The present invention will be specifically described by means of examples and comparative examples below. In the following examples, a general reagent purchased from a reagent manufacturer was used as a raw material unless otherwise specified. In addition, the characteristics of the thiol group-containing polyether polymer were evaluated by the following methods.

### [Measurement methods]

### (1) Viscosity

The viscosity of the thiol group-containing polyether polymer was measured at 25°C using a viscometer (U-EII manufactured by Toki Sangyo Co., Ltd.).

### (2) Thiol group content

A weighed thiol group-containing polyether polymer was dissolved in a mixed solution of toluene and pyridine, an aqueous potassium iodide solution was added thereto, and then the resulting solution was titrated with an iodine standard solution.

### (3) Chlorine content

The content of chlorine contained in the thiol group-containing polyether polymer was measured using an elemental analyzer (NSX-2100 manufactured by Mitsubishi Chemical Analytech Co., Ltd.).

### [Example 1]

In a 1 L reaction vessel, 200 g (1.8 mol as a hydroxy group) of trifunctional polypropylene glycol (trifunctional PPG) (OH value: 510 mg KOH/polypropylene glycol) obtained by adding propylene oxide to glycerin (in the table, abbreviated as "GLYC") and 3.7 g (0.4 mol% of the hydroxy group) of an aqueous stannous chloride (SnCl₄) solution (concentration: 50 mass%) were charged, the temperature was raised to 50°C, and 183 g (1.1 mol times the hydroxy group) of epichlorohydrin (EpCH) was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-U1000N) having a volume of 1.1 L, and then 483 g (2.0 mol times the chlorine amount of the terminal halogenated polyether polymer) of an aqueous sodium hydrogen sulfide solution (NaSH concentration: 46 mass%) was added. At this time, the proportion of the terminal halogenated polyether polymer in the volume of the closed system (reaction vessel) was 31 vol%. The phase transfer catalyst (PTC) was not used. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.5 MPa at the maximum. Thereafter, removal of the salt and neutralization were performed to obtain a colorless and transparent liquid thiol group-containing polyether polymer.

The obtained thiol group-containing polyether polymer had a thiol group content of 12.7 mass%, a viscosity of 9.3 Pa·s, and a chlorine content of 50 ppm.

### [Example 2]

A colorless and transparent liquid thiol group-containing polyether polymer was obtained in the same manner as in Example 1 except that the pressure was controlled so that the internal pressure during the substitution reaction was 0.2 MPa at the maximum.

The obtained thiol group-containing polyether polymer had a thiol group content of 12.0 mass%, a viscosity of 10.0 Pa·s, and a chlorine content of 110 ppm.

### [Example 3]

A colorless and transparent liquid thiol group-containing polyether polymer was obtained in the same manner as in Example 1 except that the charged amount of the aqueous sodium hydrogen sulfide solution (NaSH concentration: 46 mass%) was 290 g (1.2 mol times the chlorine amount of the terminal halogenated polyether polymer).

The obtained thiol group-containing polyether polymer had a thiol group content of 12.0 mass%, a viscosity of 10.4 Pa·s, and a chlorine content of 500 ppm.

### [Example 4]

In a 1 L reaction vessel, 300 g (2.7 mol as a hydroxy group) of a trifunctional polypropylene glycol (OH value: 510 mg KOH/polypropylene glycol) obtained by adding propylene oxide to glycerin and 5.6 g (0.4 mol% of the hydroxy group) of an aqueous stannous chloride solution (concentration: 50 mass%) were charged, the temperature was raised to 50°C, and 300 g (1.2 mol times the hydroxy group) of epichlorohydrin was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-D1000M) having a volume of 1.6 L, and then 791 g (2.0 mol times the chlorine amount of the terminal halogenated polyether polymer) of an aqueous sodium hydrogen sulfide solution (NaSH concentration: 46 mass%) was added. At this time, the proportion of the terminal halogenated polyether polymer in the volume of the closed system (reaction vessel) was 31%. The phase transfer catalyst (PTC) was not used. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.5 MPa at the maximum. Thereafter, removal of the salt and neutralization were performed to obtain a colorless and transparent liquid thiol group-containing polyether polymer.

The obtained thiol group-containing polyether polymer had a thiol group content of 13.0 mass%, a viscosity of 13.0 Pa·s, and a chlorine content of 150 ppm.

### [Example 5]

In a 1 L reaction vessel, 300 g (2.7 mol as a hydroxy group) of a trifunctional polypropylene glycol (OH value: 510 mg KOH/polypropylene glycol) obtained by adding propylene oxide to glycerin and 5.6 g (0.4 mol% of the hydroxy group) of an aqueous stannous chloride solution (concentration: 50 mass%) were charged, the temperature was raised to 50°C, and 300 g (1.2 mol times the hydroxy group) of epichlorohydrin was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-D1000M) having a volume of 1.6 L, and then 5 g (0.005 mol times the chlorine amount of the terminal halogenated polyether polymer) of TBAB as a phase transfer catalyst and 791 g (2.0 mol times the chlorine amount of the terminal halogenated polyether polymer) of an aqueous sodium hydrogen sulfide solution (NaSH concentration: 46 mass%) were added. At this time, the proportion of the terminal halogenated polyether polymer in the volume of the closed system (reaction vessel) was 31 vol%. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.5 MPa at the maximum. Thereafter, removal of the salt and neutralization were performed to obtain a colorless and transparent liquid thiol group-containing polyether polymer.

The obtained thiol group-containing polyether polymer had a thiol group content of 13.0 mass%, a viscosity of 12.9 Pa·s, and a chlorine content of 100 ppm.

### [Example 6]

A colorless and transparent liquid thiol group-containing polyether polymer was obtained in the same manner as in Example 5 except that 52 g (0.05 mol times the chlorine amount of the terminal halogenated polyether polymer) of TBAB was used as a phase transfer catalyst.

The obtained thiol group-containing polyether polymer had a thiol group content of 13.2 mass%, a viscosity of 12.7 Pa·s, and a chlorine content of 70 ppm.

The conditions and measurement results of Examples 1 to 6 described above are summarized in Table 1.

**[Table 1]**

| | | | Example 1 | Example 2 | Example 3 | Example 4 | Example 5 | Example 6 |
|---|---|---|---|---|---|---|---|---|
| Production of terminal halogenated polyether polymer | Trifunctional PPG | g | 200 | 200 | 200 | 300 | 300 | 300 |
| | Polyhydric alcohol of PPG | | GLYC | GLYC | GLYC | GLYC | GLYC | GLYC |
| | EpCH | Molar times/OH | 1.1 | 1.1 | 1.1 | 1.2 | 1.2 | 1.2 |
| | SnC14 | mol%/OH | 0.4 | 0.4 | 0.4 | 0.4 | 0.4 | 0.4 |
| | Temperature | °C | 80 | 80 | 80 | 80 | 80 | 80 |
| | Time | Time | 2 | 2 | 2 | 2 | 2 | 2 |
| Production of thiol group-containing polyether polymer | NaSH | (Concentration of aqueous solution) mass% | 46 | 46 | 46 | 46 | 46 | 46 |
| | | Molar times/Cl | 2.0 | 2.0 | 1.2 | 2.0 | 2.0 | 2.0 |
| | PTC (TBAB) | Molar times/Cl | 0 | 0 | 0 | 0 | 0.005 | 0.05 |
| | Volume ratio of terminal halogenated polyether polymer | vol% | 31 | 31 | 31 | 31 | 31 | 31 |
| | Maximum internal pressure | MPa | 0.5 | 0.2 | 0.5 | 0.5 | 0.5 | 0.5 |
| | Temperature | °C | 90 | 90 | 90 | 90 | 90 | 90 |
| | Time | Time | 7 | 7 | 7 | 7 | 7 | 7 |
| Properties of thiol group-containing polyether polymer | Chlorine content | ppm | 50 | 110 | 500 | 150 | 100 | 70 |
| | Viscosity | Pa·s | 9.3 | 10.0 | 10.4 | 13.0 | 12.9 | 12.7 |
| | SH group content | mass% | 12.7 | 12.0 | 12.0 | 13.0 | 13.0 | 13.2 |

### [Example 7]

In a 1 L reaction vessel, 113 g (1.0 mol as a hydroxy group) of a trifunctional polypropylene glycol (OH value: 510 mg KOH/polypropylene glycol) obtained by adding propylene oxide to glycerin and 2.1 g (0.4 mol% of the hydroxy group) of an aqueous stannous chloride solution (concentration: 50 mass%) were charged, the temperature was raised to 50°C, and 113 g (1.2 mol times the hydroxy group) of epichlorohydrin was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-V500) having a volume of 0.5 L, and then 171 g (1.2 mol times the chlorine amount of the terminal halogenated polyether polymer) of an aqueous sodium hydrogen sulfide solution (NaSH concentration: 48 mass%) was added. At this time, the proportion of the terminal halogenated polyether polymer in the volume of the closed system (reaction vessel) was 39 vol%. The phase transfer catalyst (PTC) was not used. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.5 MPa at the maximum. Thereafter, removal of the salt and neutralization were performed to obtain a colorless and transparent liquid thiol group-containing polyether polymer.

The obtained thiol group-containing polyether polymer had a thiol group content of 13.5 mass%, a viscosity of 10.5 Pa·s, and a chlorine content of 500 ppm.

### [Example 8]

In a 1 L reaction vessel, 190 g (1.7 mol as a hydroxy group) of a trifunctional polypropylene glycol (OH value: 510 mg KOH/polypropylene glycol) obtained by adding propylene oxide to glycerin and 1.8 g (0.2 mol% of the hydroxy group) of an aqueous stannous chloride solution (concentration: 50 mass%) were charged, the temperature was raised to 50°C, and 174 g (1.1 mol times the hydroxy group) of epichlorohydrin was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-D1000M) having a volume of 1.6 L, and then 264 g (1.2 mol times the chlorine amount of the terminal halogenated polyether polymer) of an aqueous sodium hydrogen sulfide solution (NaSH concentration: 48 mass%) was added. At this time, the proportion of the terminal halogenated polyether polymer in the volume of the closed system (reaction vessel) was 20 vol%. The phase transfer catalyst (PTC) was not used. The inside of the vessel was sealed without purging operation with gas, and then the reaction solution was heated and stirred at 95°C for 7 hours to perform a replacement reaction. The pressure was controlled by degassing from the pressure control valve so that the internal pressure during the substitution reaction was 0.5 MPa at the maximum. Thereafter, removal of the salt and neutralization were performed to obtain a colorless and transparent liquid thiol group-containing polyether polymer.

The obtained thiol group-containing polyether polymer had a thiol group content of 11.7 mass%, a viscosity of 12.9 Pa·s, and a chlorine content of 400 ppm.

### [Example 9]

In a 1 L reaction vessel, 300 g (2.1 mol as a hydroxy group) of a trifunctional polypropylene glycol (OH value: 400 mg KOH/polypropylene glycol) obtained by adding propylene oxide to trimethylolpropane (TMP) and 2.2 g (0.2 mol% of the hydroxy group) of an aqueous stannous chloride solution (concentration: 50 mass%) were charged, the temperature was raised to 50°C, and 237 g of epichlorohydrin (1.2 mol times the hydroxy group) was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-D1000M) having a volume of 1.6 L, and then 625 g (2.0 mol times the chlorine amount of the terminal halogenated polyether polymer) of an aqueous sodium hydrogen sulfide solution (NaSH concentration: 46 mass%) was added. At this time, the proportion of the terminal halogenated polyether polymer in the volume of the closed system (reaction vessel) was 29 vol%. The phase transfer catalyst (PTC) was not used. The inside of the vessel was sealed without purging operation with gas, and then the reaction solution was heated and stirred at 95°C for 7 hours to perform a replacement reaction. The pressure was controlled by degassing from the pressure control valve so that the internal pressure during the substitution reaction was 0.5 MPa at the maximum. Thereafter, removal of the salt and neutralization were performed to obtain a colorless and transparent liquid thiol group-containing polyether polymer.

The obtained thiol group-containing polyether polymer had a thiol group content of 11.4 mass%, a viscosity of 10.2 Pa·s (25°C), and a chlorine content of 150 ppm.

### [Comparative Example 1]

In a 1 L reaction vessel, 300 g (2.7 mol as a hydroxy group) of a trifunctional polypropylene glycol (OH value: 510 mg KOH/polypropylene glycol) obtained by adding propylene oxide to glycerin and 5.6 g (0.4 mol% of the hydroxy group) of an aqueous stannous chloride solution (concentration: 50 mass%) were charged, the temperature was raised to 50°C, and 275 g (1.1 mol times the hydroxy group) of epichlorohydrin was added dropwise thereto over 1 hour. Then, the mixture was stirred at 80°C for 2 hours to obtain a terminal halogenated polyether polymer.

Subsequently, 725 g (2.0 mol times the chlorine amount of the terminal halogenated polyether polymer) of an aqueous sodium hydrogen sulfide solution (concentration: 46 mass%) was added. The phase transfer catalyst (PTC) was not used. The temperature was raised under atmospheric pressure in an open system, and the reaction was started at 90°C. Since the side reaction proceeded to extremely decrease the thiol group content, and the viscosity increased during the reaction to gelate the polymer, a liquid polymer was not obtained.

### [Comparative Example 2]

In a 0.5 L reaction vessel, 150 g (1.35 mol as a hydroxy group) of a trifunctional polypropylene glycol (OH value: 510 mg KOH/polypropylene glycol) obtained by adding propylene oxide to glycerin and 2.8 g (0.4 mol% of the hydroxy group) of an aqueous stannous chloride solution (concentration: 50 mass%) were charged, the temperature was raised to 50°C, and 138 g (1.1 mol times the hydroxy group) of epichlorohydrin was added dropwise thereto over 1 hour. Then, the mixture was stirred at 80°C for 2 hours to obtain a terminal halogenated polyether polymer.

The resulting terminal halogenated polyether polymer was transferred to an autoclave (TEM-D1000M) having a volume of 1.6 L, and then 501 g (1.2 mol times the chlorine amount of the terminal halogenated polyether polymer) of an aqueous sodium hydrogen sulfide solution (NaSH concentration: 20 mass%) was added. At this time, the proportion of the terminal halogenated polyether polymer in the volume of the closed system (reaction vessel) was 16 vol%. The phase transfer catalyst (PTC) was not used. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.4 MPa at the maximum. Thereafter, removal of the salt and neutralization were performed to obtain a colorless and transparent liquid thiol group-containing polyether polymer.

The obtained thiol group-containing polyether polymer had a thiol group content of 11.3 mass%, a viscosity of 12.9 Pa·s, and a chlorine content of 3,800 ppm.

### [Comparative Example 3]

In a 1 L reaction vessel, 156 g (1.4 mol as a hydroxy group) of a trifunctional polypropylene glycol (OH value: 510 mg KOH/polypropylene glycol) obtained by adding propylene oxide to glycerin and 1.5 g (0.2 mol% of the hydroxy group) of an aqueous stannous chloride solution (concentration: 50 mass%) were charged, the temperature was raised to 50°C, and 156 g (1.2 mol times the hydroxy group) of epichlorohydrin was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-D1000M) having a volume of 1.6 L, and then 247 g (1.2 mol times the chlorine amount of the terminal halogenated polyether polymer) of an aqueous sodium hydrogen sulfide solution (NaSH concentration: 46 mass%) was added. At this time, the proportion of the terminal halogenated polyether polymer in the volume of the closed system (reaction vessel) was 17 vol%. The phase transfer catalyst (PTC) was not used. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.2 MPa at the maximum. Thereafter, removal of the salt and neutralization were performed to obtain a colorless and transparent liquid thiol group-containing polyether polymer.

The obtained thiol group-containing polyether polymer had a thiol group content of 11.3 mass%, a viscosity of 29.8 Pa·s, and a chlorine content of 800 ppm.

### [Comparative Example 4]

In a 1 L reaction vessel, 230 g (2.1 mol as a hydroxy group) of a trifunctional polypropylene glycol (OH value: 510 mg KOH/polypropylene glycol) obtained by adding propylene oxide to glycerin and 4.3 g (0.4 mol% of the hydroxy group) of an aqueous stannous chloride solution (concentration: 50 mass%) were charged, the temperature was raised to 50°C, and 230 g (1.2 mol times the hydroxy group) of epichlorohydrin was added dropwise thereto over 1 hour. Then, the mixture was stirred at 80°C for 2 hours to obtain a terminal halogenated polyether polymer.

The total amount of the resulting terminal halogenated polyether polymer was transferred to an autoclave (TEM-D1000M) having a volume of 1.6 L, and then 837 g (1.2 mol times the chlorine amount of the terminal halogenated polyether polymer) of an aqueous sodium hydrogen sulfide solution (NaSH concentration: 20 mass%) was added. At this time, the proportion of the terminal halogenated polyether polymer in the volume of the closed system (reaction vessel) was 25 vol%. The phase transfer catalyst (PTC) was not used. The inside of the vessel was sealed without purging operation with gas, and then the reaction solution was heated and stirred at 90°C for 7 hours to perform a replacement reaction. The pressure was controlled by degassing from the pressure control valve so that the internal pressure during the substitution reaction was 0.4 MPa at the maximum. Thereafter, removal of the salt and neutralization were performed to obtain a colorless and transparent liquid thiol group-containing polyether polymer.

The obtained thiol group-containing polyether polymer had a thiol group content of 12.6 mass%, a viscosity of 15.5 Pa·s, and a chlorine content of 5,500 ppm.

The conditions and measurement results of Examples 7 to 9 and Comparative Examples 1 to 4 described above are summarized in Table 2.

**[Table 2-1]**

| | | | Example 7 | Example 8 | Example 9 | Comparative Example 1 |
|---|---|---|---|---|---|---|
| Production of terminal halogenated polyether polymer | Trifunctional PPG | 9 | 113 | 190 | 300 | 300 |
| | Polyhydric alcohol of PPG | | GLYC | GLYC | TMP | GLYC |
| | EpCH | Molar times/OH | 1.2 | 1.1 | 1.2 | 1.1 |
| | SnCl4 | mol%/OH | 0.4 | 0.2 | 0.2 | 0.4 |
| | Temperature | °C | 80 | 80 | 80 | 80 |
| | Time | Time | 2 | 2 | 2 | 2 |
| Production of thiol group-containing polyether polymer | NaSH | (Concentration of aqueous solution) mass% | 48 | 48 | 46 | 46 |
| | | Molar times/Cl | 1.2 | 1.2 | 2.0 | 2.0 |
| | PTC (TBAB) | Molar times/Cl | 0 | 0 | 0 | 0 |
| | Volume ratio of terminal halogenated polyether polymer | vol% | 39 | 20 | 29 | - |
| | Maximum internal pressure | MPa | 0.5 | 0.5 | 0.5 | (Open system) |
| | Temperature | °C | 90 | 95 | 95 | 90 |
| | Time | Time | 7 | 7 | 7 | - |
| Properties of thiol group-containing polyether polymer | Chlorine content | ppm | 500 | 400 | 150 | - |
| | Viscosity | Pa·s | 10.5 | 12.9 | 10.2 | Gelation |
| | SH group content | mass% | 13.5 | 11.7 | 11.4 | - |

**[Table 2-2]**

| | | | Comparative Example 2 | Comparative Example 3 | Comparative Example 4 |
|---|---|---|---|---|---|
| Production of terminal halogenated polyether polymer | Trifunctional PPG | g | 150 | 156 | 230 |
| | Polyhydric alcohol of PPG | | GLYC | GLYC | GLYC |
| | EpCH | Molar times/OH | 1.1 | 1.2 | 1.2 |
| | SnCl4 | mol%/OH | 0.4 | 0.2 | 0.4 |
| | Temperature | °C | 80 | 80 | 80 |
| | Time | Time | 2 | 2 | 2 |
| Production of thiol group-containing polyether polymer | NaSH | (Concentration of aqueous solution) mass% | 20 | 46 | 20 |
| | | Molar times/Cl | 1.2 | 1.2 | 1.2 |
| | PTC (TBAB) | Molar times/Cl | 0 | 0 | 0 |
| | Volume ratio of terminal halogenated polyether polymer | vol% | 16 | 17 | 25 |
| | Maximum internal pressure | MPa | 0.4 | 0.2 | 0.4 |
| | Temperature | °C | 90 | 90 | 90 |
| | Time | Time | 7 | 7 | 7 |
| Properties of thiol group-containing polyether polymer | Chlorine content | ppm | 3800 | 800 | 5500 |
| | Viscosity | Pa·s | 12.9 | 29.8 | 15.5 |
| | SH group content | mass% | 11.3 | 11.3 | 12.6 |

## Claims

1. A method for producing a thiol group-containing polyether polymer by reacting a terminal halogenated polyether polymer and a hydrogen sulfide metal salt by a substitution reaction, wherein
the terminal halogenated polyether polymer has a polyether moiety represented by the following general formula (1) in a main chain of the terminal halogenated polyether polymer, and a structure represented by the following general formula (2) at a terminal of the terminal halogenated polyether polymer,
the hydrogen sulfide metal salt is represented by the following general formula (3),
the thiol group-containing polyether polymer has a polyether moiety represented by the general formula (1), and a structural unit represented by the following formula (4) at a terminal of the thiol group-containing polyether polymer,
the substitution reaction is performed in a closed system,
the terminal halogenated polyether polymer is charged into the closed system in an amount of 20 vol% or more of a volume of the closed system, and
the hydrogen sulfide metal salt is charged into the closed system as an aqueous solution having a concentration of 25 mass% or more:
R¹-(R²O)ₙ]ₘ- (1)
where R¹ is a group having a structure obtained by removing a hydrogen atom from a polyvalent amine or polyhydric alcohol having 10 or less carbon atoms, R² is an alkylene group having 2 to 6 carbon atoms, n is an integer of 1 to 200, and m is an integer of 2 to 8,
-CH₂CH(OH) CH₂-X (2)
where X is a halogen atom,
M (SH)ₖ (3)
where M is an alkali metal or alkaline earth metal, and k is an integer of 1 to 2, and
-CH₂CH(OH) CH₂-SH (4) .

2. The method for producing a thiol group-containing polyether polymer according to claim 1, wherein hydrogen sulfide gas is not supplied from an outside of the closed system.

3. The method for producing a thiol group-containing polyether polymer according to claim 1 or 2, wherein the substitution reaction is performed in a state in which an internal pressure of the closed system is 0.01 to 5 MPa.

4. The method for producing a thiol group-containing polyether polymer according to any one of claims 1 to 3, comprising a step of performing an addition reaction of a polyether polyol having the polyether moiety represented by the general formula (1) with epihalohydrin to obtain the terminal halogenated polyether polymer.

5. The method for producing a thiol group-containing polyether polymer according to claim 4, wherein the polyether polyol is polypropylene glycol obtained by adding propylene oxide to glycerin, trimethylolpropane, trimethylolethane, or pentaerythritol.

6. The method for producing a thiol group-containing polyether polymer according to any one of claims 1 to 5, wherein the hydrogen sulfide metal salt is sodium hydrogen sulfide.

7. The method for producing a thiol group-containing polyether polymer according to any one of claims 1 to 6, wherein a phase transfer catalyst is not used in the substitution reaction.

8. The method for producing a thiol group-containing polyether polymer according to any one of claims 1 to 7, wherein a non-organic solvent or a water solvent is used in the substitution reaction.
